# EUROPEAN PATENT SPECIFICATION

(11) **EP 0 265 476 B1**
(45) Date of publication and mention of the grant of the patent: **13.01.1993**
(21) Application number: 87902614.4
(22) Date of filing: 16.04.1987
(51) Int. Cl.: H04N 5/782, H04N 7/087

(54) **DEVICE FOR THE REMOTE CONTROL OF A VIDEORECORDER OR A VIDEORECEIVER**
VORRICHTUNG FÜR DIE FERNSTEUERUNG EINES VIDEORECORDERS ODER EINES VIDEOEMPFÄNGERS
DISPOSITIF POUR LA COMMANDE A DISTANCE D'UN ENREGISTREUR VIDEO OU D'UN RECEPTEUR VIDEO

(30) Priority: 18.04.1986 GB 8609524
(43) Date of publication of application: 04.05.1988
(60) Divisional application: 92200942.8
(73) Proprietor: BRITISH BROADCASTING CORPORATION, London W1A 1AA (GB)
(72) Inventor: SANDBANK, Charles, Peter, Surrey (GB)
(74) Representative: Pears, David Ashley
(86) International application number: PCT/GB87/00259
(87) International publication number: WO 87/06416

(56) References cited:
- DE-A- 3 335 082
- Rundfunktechnische Mitteilungen, vol. 26, no. 6, 1982, (Hamburg, DE), G. Hofmann et al.: "Videotext programmiert videorecorder2, pages 254-257
- Nachrichtentechnische Zeitschrift, vol. 35, no. 6, June 1982, (Schäbisch-Gmund, DE), H.E. Krüger: "Das digital Fernsehkennungssystem ZPS", pages 368-376

## Description

The present invention relates to television receivers and to video recorders, commonly known as video tape recorders (VTR) or video cassette recorders (VCR), and in particular to the control of such apparatus.

The essential components of a video recorder are the electromechanical components including the tape drive mechanism, control relays and electromagnets, magnetic heads and head scanning mechanism. Secondly there are the electronic circuits for processing the video signals being recorded or played back. Thirdly there is the control unit which controls the electromechanical components and the electronic circuit. The control unit may be very simple providing just channel selection, record, playback etc., commands, or may be provided with many facilities for scheduled recording, various modes of replay and so on.

In any event, some means of providing control inputs have to be provided and, at the simplest, these may consist solely of front panel controls. However, it is well known to provide domestic video recorders with remote control units which either plug into the recorder or transmit infra-red or ultrasonic control signals to a sensor on the recorder. Television receivers are also well known with remote control units as well as front panel controls to effect channel selection and switch between ON and OFF (standby) conditions.

In the professional field it is known to control recorders by transmitting control signals along with the wanted information signal. The recorder responds appropriately to the received control signals. See for example GB-A-2 126 002, which shows how a video recording and playback unit can be turned on in response to broadcast codes in the signal.

The object of the present invention is to make it possible to add such facilities to domestic receivers and video recorders, in particular as an add on facility for existing receivers and recorders, without the need to re-design the receivers and recorders.

It is known to use a bar code reader responsive to television programme schedule data input by the user to enter programme control data in a programme memory, see GB-A-2 034 995 in respect of receivers and EP-A-0 133 985 and EP-A-0 122 626 in respect of video recorders. The equipment receives control signals accompanying the broadcast signal and compares these with the data in the programme memory to determine the times at which the video recorder is switched ON and OFF. In Nachrichtentechnische Zeitschrift, Vol. 35, No. 6, June 1982 pages 368-376 is described the German ZPS digital TV identification system in which data packets are transmitted with the TV signal, and at a receiver the ZPS data is continuously compared with programme selections previously input by the user. The input can be by means of a light pen and bar code. Preferably the transmitted data includes the scheduled programme time, so that if transmission of the programme is delayed correct recordal by the recorder may still be made.

The present invention in its various aspects is defined in the appended claims to which reference should now be made.

In DE-A-3 355 082 a programming mode is signalled either by a special incoming teletext signal or by the user. The screen then shows a programme schedule with a cursor which may be moved to select for entry into a store the programmes which are to be recorded by the VCR. Similarly to the arrangement in which entry is by means of bar codes, programme selections are thus entered for later matching with received control codes.

In the present invention, the remote control unit and the second control unit can act independently as parallel, alternative means of control. Therefore the second unit can be provided as an add-on facility to an existing video recorder or receiver.

An embodiment of the invention will now be described, by way of example, with reference to the accompanying drawings, in which:
**Figure 1** shows the main components of a video recorder;
**Figure 2** is a diagram illustrating the physical set-up;
**Figure 3** is a block diagram of an off-air remote controller, and
**Figure 4** shows a known control signal format.

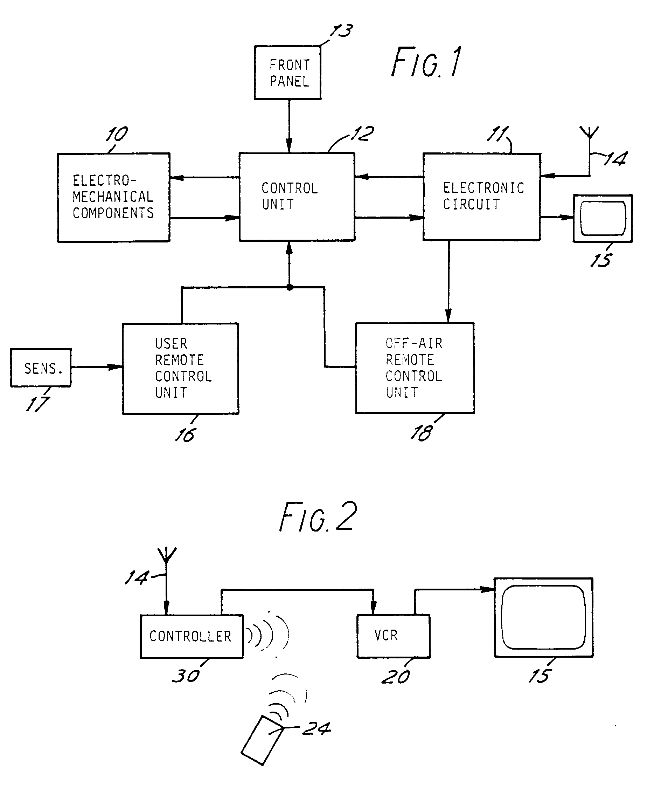

The video recorder shown in Figure 1 comprises electromechanical components 10, electronic circuits 11, and a control unit 12. The input to and output from the electronic circuit are symbolised by an aerial 14 and a television set 15. The control unit 12 is provided with conventional front panel controls 13. The recorder is also provided with a conventional user remote control unit 16 which picks up signals directed on to an infra-red sensor 17 by a hand-held unit with buttons for effecting channel selection, record, playback and so on. The video recorder as so far described represents conventional practice.

The recorder according to the present invention is provided with an off-air remote control unit 18 which can provide output signals (channel selection, record etc.) to the main control unit 12 which are exactly the same as those conventionally provided by the user remote control unit 16. The off-air remote control unit 18 derives its input, via the electronic circuit 11, from the received television signal which is accompanied by data signals, for example signals conforming to the German VPS standards. Such VPS codes are sometimes transmitted in Germany with the broadcast signal to control the operation of recorders remotely.

In Figure 1 the off-air unit 18 is shown feeding directly into the main control unit 12. However, in the preferred practice of the invention as illustrated in Figure 2, the off-air unit is not built into the video recorder itself but is constructed as a separate controller which passes the control commands to the recorder using the input device on the recorder provided for the hand-held remote control unit. This has the advantage that no modification whatsoever to the recorder is required. In the case of infra-red or ultrasonic remote control systems, the controller radiates control signals to the sensor 17, just like the hand-held unit, which can still be used in the normal way.

In the arrangement of a receiving installation using such a broadcast controller shown in Figure 2, the aerial 14 and the television receiver 15 are connected to the recorder 20 in the conventional manner, except that the aerial signal is preferably "looped through" the separate off-air controller 30 as shown. The television receiver 15, the recorder 20 and the hand-held remote control unit 24 can all be used in the normal way except when the off-air controller 30 responds to codes in the transmitted signal. The controller 30 could be made to respond to signals in the VPS format, but the transmission efficiency and convenience can be improved by using teletext data signals for the control codes.

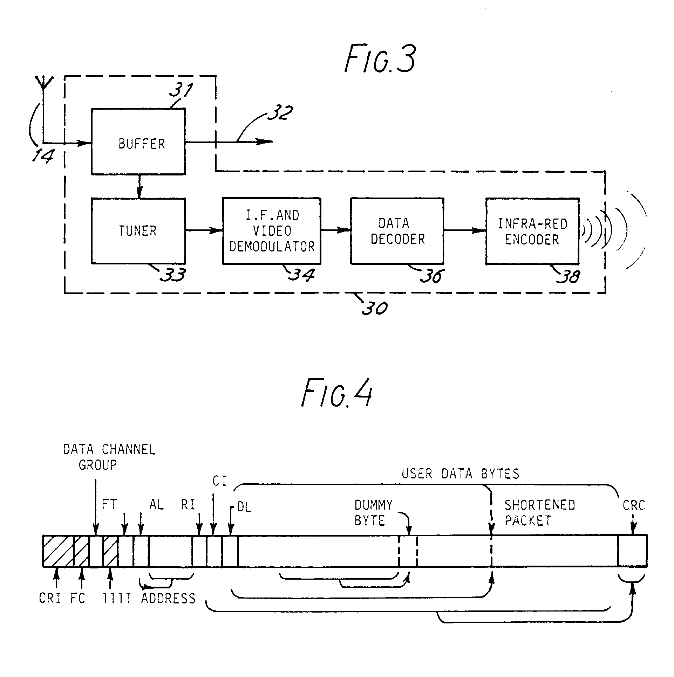

The main units of the off-air controller 30 are shown in Figure 3. Signals from the aerial 14 are buffered in a buffer circuit 31 to provide a "loop-through" output 32 to the recorder 20 and to feed tuner and demodulator stages 33, 34 similar to those of a conventional television receiver. Teletext data signals corresponding to the available remote control functions are extracted from the vertical blanking intervals of the signal by a data decoder 36, and re-encoded in a circuit 38 to produce infra-red (or ultrasonic) signals with the same coding format as those produced by the hand-held controller 24.

If the video recorder uses a hand-held unit connected by wire, the controller 30 is plugged in in place of the hand-held unit 24. This has the disadvantage that the hand-held unit cannot be used when the controller is connected. This problem could be overcome by providing the controller with a plug incorporating a socket for the hand-held unit.

The structure of a suitable teletext data signal (known as Datacast) is shown in Figure 4. This consists of a two-level signal starting with Clock Run-in (CRI) and Framing Code (FC) data in the normal teletext format. Background detail for this system can be found in "BBC Datacast - The Transmission System" from the IERE Conference on Electronic Delivery of Data and Software, September 1986: IERE Conference Publication No. 69, pp. 93-98.

The provision of a separate off-air remote control unit 18 makes it possible for the conventional, domestic video recorder to make use of the data signals, because the unit 30 effectively decodes these signals and converts them to control signals (e.g. channel selection, record) simulating those from the user remote control unit 24. It accordingly becomes possible to switch the recorder on to record by remote control over the air (record command) to select the channel being recorded (channel select command), to terminate recording at the end of a program and so on.

The hand-held remote control unit 24 is usually dedicated to a particular application, that is to say it would emit only one set of control codes matching those for a corresponding video recorder (or television receiver). However, the additional unit 30 could be capable of providing any one of a number of different sets of control signals and have a selector device for "strapping" the unit to provide the required set for a given application. Implementation could largely be in software terms with appropriate codes set up in ROM (read-only memory). Selection could be effected by plugging in different ROMs.

## Claims

1. A method of programming a TV broadcast receiving device, viz. a video recorder or a television receiver, the method including a remote control mode and a second control mode, the remote control mode comprising the steps of providing a remote control hand-held unit having manually-operable elements thereon, actuating the manually-operable elements, generating coded signals representing the actuated elements, transmitting the coded signals by means of an infra-red or ultrasonic link to a sensor on the receiving device, and actuating the receiving device in accordance with the received coded signals, the second control mode comprising the steps of receiving broadcast programme control signals, generating coded signals representing the received programme control signals, which coded signals simulate the coded signals generated in the remote control mode, transmitting the coded signals by means of another infra-red or ultrasonic link, respectively, to the same sensor on the receiving device, and actuating the receiving device in accordance with the received coded signals, and the receiving device does not distinguish between coded signals received in the remote control mode and coded signals received in the second control mode.

2. A video recorder including electromechanical components (10), an electronic circuit (11), a main control unit (12) therefor, and a remote control signal receiving unit (16) including an infra-red or ultrasonic sensor for providing control signals to the main control unit, the recorder being provided with a remote control hand-held unit (24) having manually-operable elements thereon and the remote control unit including means for generating coded signals representing the actuated elements and means including an infra-red or ultrasonic transmitting device for transmitting the coded signals to the sensor on the video recorder, the recorder being further provided with a second control unit (30), the second control unit comprising means (33,34) for receiving broadcast programme control signals, means (36) for generating coded signals representing the received programme control signals, which coded signals simulate the coded signals generated in the remote control unit, and means (38) including a second infra-red or ultrasonic transmitting device, respectively, for transmitting the coded signal to the sensor on the video recorder.

3. A video recorder according to claim 2, wherein the second control unit (30) is capable of providing any one of a number of different sets of control signals and comprises a selector device for selecting one such set.

4. A video recorder according to claim 3, wherein the selector device comprises an interchangeable read-only memory device.

5. A controller (30) for use with a video recorder (20) which has an input device (16) including a sensor for receiving infra-red or ultrasonic signals from a hand-held remote control unit (24), the controller comprising input means for receiving a television signal containing coded programme control signals, decoder means (36) for decoding the programme control signals in the television signals, an encoder (38) for re-coding the decoded signals in a form for controlling the video recorder by way of the said input device, and an infra-red or ultrasonic transmitter for radiating control signals to the sensor in the said input device of the recorder.

6. A controller according to claim 5, in which the input means receives a radio frequency (RF) input television signal.

7. A controller according to claim 6, including an input for connection to an aerial (14) to receive a broadcast television signal, an output (32), and a buffer amplifier (31) connected between the input and the output (32) for looping out the signal on the aerial input to the video recorder, a tuner (33) coupled to the input to receive the broadcast television signal, and a demodulator (34) connected to the tuner and supplying an output to the decoder means (36).

8. A television receiver including an electronic circuit (11) and a main control unit (12) therefor, and a remote control signal receiving unit (16) including an infra-red or ultrasonic sensor for providing control signals to the main control unit, the receiver being provided with a remote control hand-held unit (24) having manually-operable elements thereon and the remote control unit including means for generating coded signals representing the actuated elements and means including an infra-red or ultrasonic transmitting device for transmitting the coded signals to the sensor on the receiver, the receiver being further provided with a second control unit (30), the second control unit comprising means (33,34) for receiving broadcast programme control signals, means (36) for generating coded signals representing the received programme control signals, which coded signals simulate the coded signals generated in the remote control unit, and means (38) including a second infra-red or ultrasonic transmitting device, respectively, for transmitting the coded signal to the sensor on the receiver.

9. A video recorder including electromechanical components (10), an electronic circuit (11), a main control unit (12) therefor, and a remote control signal receiving unit (16) for providing control signals to the main control unit representing at least channel selection, record and playback commands, the recorder being provided with a remote control hand-held unit (17) having manually-operable elements thereon and the remote control unit including means for generating coded signals representing the actuated elements and transmitting the coded signals to the remote control receiving unit (16) of the video recorder, the recorder being further provided with a second remote control unit (18), the second remote control unit comprising means (36,38) responsive to broadcast programme control signals to generate coded signals representing at least channel selection and record commands, which coded signals simulate the coded signals output by the remote control signal receiving unit, and the output of the second remote control unit is coupled to the main control unit for control thereof.

10. A television receiver including an electronic circuit (11), a main control unit (12) therefor, and a remote control signal receiving unit (16) for providing control signals to the main control unit representing at least channel selection, and ON/OFF commands, the receiver being provided with a remote control hand-held unit (17) having manually-operable elements thereon and the remote control unit including means for generating coded signals representing the actuated elements and transmitting the coded signals to the remote control receiving unit (16), of the the receiver, the receiver being further provided with a second remote control unit (18), the second remote control unit comprising means (36,38) responsive to broadcast programme control signals to generate coded signals representing at least channel selection and record commands, which coded signals simulate the coded signals output by the remote control signal receiving unit, and the output of the second remote control unit is coupled to the main control unit for control thereof.

## Patentansprüche

1. Verfahren zum Programmieren einer Fernsehsendungs-Empfangsvorrichtung, d.h. eines Videorecorders oder eines Fernsehempfängers, das eine Fernsteuerungs-Betriebsart und eine zweite Steuerungs-Betriebsart umfaßt, wobei die Fernsteuerungs-Betriebsart die folgenden Schritte umfaßt: das Vorsehen einer in der Hand zu haltenden Fernsteuerungs-Handeinheit mit manuell betätigbaren Elementen daran, das Betätigen der manuell betätigbaren Elemente, das Erzeugen codierter Signale, die die betätigten Elemente darstellen, das Übertragen der codierten Signale mittels einer Infrarot- oder Ultraschall-Verbindung zu einem Fühler an der Empfangsvorrichtung und das Betätigen der Empfangsvorrichtung in Übereinstimmung mit den empfangenen codierten Signalen, und wobei die zweite Steuerungs-Betriebsart die folgenden Schritte umfaßt: das Empfangen der senderseitig gesendeten Programmsteuersignale, das Erzeugen codierter Signale, die die empfangenen Programmsteuersignale darstellen und die in der Fernsteuerungs-Betriebsart erzeugten codierten Signale nachbilden, das Übertragen der codierten Signale mittels einer weiteren Infrarot- oder Ultraschall-Verbindung, jeweils zum gleichen Fühler an der Empfangsvorrichtung, und das Betätigen der Empfangsvorrichtung in Übereinstimmung mit den empfangenen codierten Signalen, wobei die Empfangsvorrichtung nicht zwischen in der Fernsteuerungs-Betriebsart empfangenen codierten Signalen und in der zweiten Steuerungs-Betriebsart empfangenen codierten Signalen unterscheidet.

2. Videorecorder mit elektromechanischen Bauteilen (10), einer elektronischen Schaltung (11), einer Hauptsteuereinheit (12) für diese und eine Fernsteuerungssignalempfangseinheit (16), die einen Infrarot- oder Ultraschallfühler zur Abgabe von Steuersignalen an die Hauptsteuereinheit, wobei der Videorecorder mit einer in der Hand zu haltenden Fernsteuerungs-Einheit (24) versehen ist, die manuell betätigbare Elemente aufweist, und die Fernsteuerungs-Einheit Mittel zum Erzeugen von die betätigten Elemente darstellenden codierten Signalen und eine Infrarot- oder Ultraschall-Sendevorrichtung aufweisende Mittel zum Übertragen der codierten Signale zu dem Fühler am Videorecorder aufweist, wobei der Videorecorder ferner mit einer zweiten Steuereinheit (30) versehen ist, die aufweist: Mittel (33, 34) zum Empfangen senderseitig ausgesendeter Programmsteuersignale, Mittel (36) zum Erzeugen codierter Signale, die die empfangenen Programmsteuersignale darstellen, wobei die codierten Signale die von der Fernsteuereinheit erzeugten codierten Signale nachbildet, und Mittel (38), die eine zweite Infrarot- oder Ultraschall-Sendevorrichtung aufweist, jeweils zur Übertragung codierter Signale zum Fühler am Videorecorder.

3. Videorecorder nach Anspruch 2, bei dem die zweite Steuereinheit (30) in der Lage ist, irgendeine von einer Anzahl verschiedener Gruppen von Steuersignalen zu erzeugen, und eine Wählvorrichtung zum Wählen einer dieser Gruppen enthält.

4. Videorecorder nach Anspruch 3, bei dem die Wählvorrichtung eine austauschbare Festspeichervorrichtung aufweist.

5. Steuerung (30) zur Verwendung mit einem Videorecorder (20), der eine Eingabe-Vorrichtung (16) mit einem Fühler zum Empfangen von Infrarot- oder Ultraschallsignalen von einer Fernsteuerungs-Handeinheit (24), wobei die Steuerung aufweist: Eingabemittel zum Empfangen eines Fernsehsignals, das codierte Programmsteuersignale enthält, Decodiermittel (36) zum Decodieren der Programmsteuersignale in den Fernsehsignalen, einen Codierer (38) zum Umcodieren der decodierten Signale in eine Form zur Steuerung des Videorecorders mittels der erwähnten Eingabevorrichtung und einen Infrarot- oder Ultraschallsender zum Ausstrahlen von Steuersignalen zum Fühler in der erwähnten Eingabevorrichtung des Recorders.

6. Steuerung nach Anspruch 5, bei der das Eingabemittel ein Hochfrequenz-Eingangsfernsehsignal empfängt.

7. Steuerung nach Anspruch 6, mit einem Eingang für den Anschluß an eine Antenne (14) zum Empfangen eines senderseitig ausgesendeten Fernsehsignals, einen Ausgang (32) und einen Trennverstärker (31) zwischen dem Eingang und dem Ausgang (32) zum Abzweigen des Signals am Antenneneingang zum Videorecorder, einem mit dem Eingang verbundenen Tuner (33) zum Empfangen des senderseitig ausgesendeten Fernsehsignals und einem Demodulator (34), der mit dem Tuner verbunden ist und dem Decodiermittel (36) ein Ausgangssignal zuführt.

8. Fernsehempfänger mit einer elektronischen Schaltung (11) und einer Hauptsteuereinheit (12) dafür und einer Fernsteuerungssignal-Empfangseinheit (16), die einen Infrarot- oder Ultraschallfühler zur Abgabe von Steuersignalen an die Hauptsteuereinheit aufweist, wobei der Empfänger mit einer Fernsteuerungs-Handeinheit (24) versehen ist, die manuell betätigbare Elemente daran aufweist, und die Fernsteuerungseinheit Mittel zum Erzeugen codierter Signale, die die betätigten Elemente darstellen, und Mittel aufweist, die eine Infrarot- oder Ultraschall-Sendevorrichtung zum Aussenden der codierten Signale an den Fühler des Empfängers aufweisen, wobei der Empfänger ferner mit einer zweiten Steuereinheit (30) versehen ist, die aufweist: Mittel (33, 34) zum Empfangen senderseitig ausgesendeter Programmsteuersignale, Mittel (36) zum Erzeugen codierter Signale, die die empfangenen Programmsteuersignale darstellen und die von der Fernsteuereinheit erzeugten codierten Signale nachbilden, und Mittel (38) mit einer zweiten Infrarot- oder Ultraschall-Sendevorrichtung, jeweils zum Aussenden codierter Signale zum Fühler des Empfängers.

9. Videorecorder mit elektromechanischen Bauteilen (10), einer elektronischen Schaltung (11), einer Hauptsteuereinheit (12) dafür und einer Fernsteuerungs-Signalempfangseinheit (16) zur Abgabe von Steuersignalen an die Hauptsteuereinheit, die wenigstens Kanalwähl-, Aufzeichnungs- und Wiedergabe-Befehle darstellen, wobei der Videorecorder mit einer Fernsteuerungs-Handeinheit (17) versehen ist, die manuell betätigbare Elemente daran und Mittel zum Erzeugen von die betätigten Elemente darstellenden codierten Signalen und Aussenden der codierten Signale zur Fernsteuerungssignalempfangseinheit (16) des Videorecorders aufweist, wobei der Videorecorder ferner mit einer zweiten Fernsteuerungseinheit (18) versehen ist, die aufweist: Mittel (36, 38), die in Abhängigkeit von den senderseitig ausgesendeten Programmsteuersignalen codierte Signale erzeugt, die wenigstens Kanalwähl- und Aufzeichnungsbefehle darstellen und die von der Fernsteuerungssignalempfangseinheit abgegebenen codierten Signale nachbilden, und wobei der Ausgang der zweiten Fernsteuerungseinheit mit der Hauptsteuerungseinheit zu deren Steuerung verbunden ist.

10. Fernsehempfänger mit einer elektronischen Schaltung (11), einer Hauptsteuereinheit (12) dafür und einer Fernsteuerungssignalempfangseinheit (16) zur Abgabe von Steuersignalen an die Hauptsteuereinheit, die wenigstens Kanalwähl- und EIN/AUS-Befehle darstellen, wobei der Empfänger mit einer in der Hand zu haltenden Fernsteuerungs-Handeinheit (17) versehen ist, die manuell betätigbare Elemente daran aufweist, und die Fernsteuerungseinheit Mittel zum Erzeugen codierter Signale enthält, die die betätigten Elemente darstellen, und die codierten Signale zur Fernsteuerungssignalempfangseinheit (16) des Empfängers aussendet, wobei der Empfänger ferner mit einer zweiten Fernsteuerungseinheit (18) versehen ist, die aufweist: Mittel (36, 38), die in Abhängigkeit von senderseitig ausgesendeten Programmsteuersignalen codierte Signale erzeugen, die wenigstens Kanalwähl- und Aufzeichnungsbefehle darstellen und die von der Fernsteuerungssignalempfangseinheit abgegebenen codierten Signale nachbilden, und wobei der Ausgang der zweiten Fernsteuerungseinheit mit der Hauptsteuerungseinheit zu deren Steuerung verbunden ist.

## Revendications

1. Procédé de programmation d'un dispositif de réception de diffusion TV, à savoir un enregistreur vidéo ou un récepteur de télévision, le procédé comportant un mode télécommande et un second mode commande, le mode télécommande comprenant les étapes fournissant une unité de télécommande portative ayant des éléments opérables manuellement, mettant en marche les éléments opérables manuellement, générant des signaux codés représentant les éléments mis en marche, transmettant les signaux codés au moyen d'une liaison par infrarouge ou par ultrason vers un capteur du dispositif de réception, et mettant en marche le dispositif de réception conformément aux signaux codés reçus, le second mode commande comprenant les étapes de réception des signaux de commande du programme diffusé, générant des signaux codés représentant les signaux de commande du programme reçu, lesquels signaux codés simulent les signaux codés générés par le mode télécommande, transmettant les signaux codés au moyen d'une autre liaison infrarouge ou à ultrasons, respectivement, au même capteur du dispositif de réception, et mettant en marche le dispositif de réception conformément aux signaux codés reçus, et le dispositif de réception ne fait pas la distinction entre des signaux codés reçus dans le mode télécommande et des signaux codés reçus dans le second mode commande.

2. Enregistreur vidéo comprenant des composants électromécaniques (10), un circuit électronique (11), une unité de commande principale (12) pour celui-ci, et une unité (16) recevant le signal de télécommande comprenant un capteur infrarouge ou à ultrasons pour fournir des signaux de commande à l'unité de commande principale, l'enregistreur étant muni d'une unité portative (24) de télécommande ayant des éléments actionnables manuellement et l'unité de télécommande comprenant un moyen pour générer des signaux codés représentant les éléments mis en marche et un moyen comprenant un dispositif de transmission par infrarouge ou par ultrasons pour transmettre les signaux codés au capteur de l'enregistreur vidéo, l'enregistreur vidéo étant de plus muni d'une seconde unité de commande (30), la seconde unité de commande comprenant un moyen (33,34) pour recevoir des signaux de commande du programme diffusé, un moyen (36) pour générer des signaux codés représentant les signaux de commande du programme reçu, lesquels signaux codés simulent les signaux codés générés dans l'unité de télécommande, et un moyen (38) comprenant un second dispositif de transmission infrarouge ou par ultrasons, respectivement, pour transmettre le signal codé au capteur de l'enregistreur vidéo.

3. Enregistreur vidéo selon la revendication 2, dans lequel la seconde unité de commande (30) est capable de fournir n'importe quel jeu d'un nombre de jeux différents de signaux de commande et comprend un dispositif de sélection pour choisir un tel jeu.

4. Enregistreur vidéo selon la revendication 3, dans lequel le dispositif de sélection comprend un dispositif à mémoire morte interchangeable.

5. Contrôleur (30) utilisé avec un enregistreur vidéo (20) qui a un dispositif d'entrée (16) comprenant un capteur pour recevoir des signaux en infrarouge ou à ultrasons d'une unité portative (24) de télécommande, le contrôleur comprenant des moyens d'entrée pour recevoir un signal de télévision contenant des signaux codés de commande du programme, un moyen décodeur (36) pour décoder les signaux de commande de programme dans les signaux de télévision, un codeur (38) pour recoder les signaux décodés dans une forme pour commander l'enregistreur vidéo par ledit dispositif d'entrée, et un transmetteur à infrarouge ou à ultrasons rayonnant des signaux de commande vers le capteur dudit dispositif d'entrée de l'enregistreur.

6. Contrôleur selon la revendication 5, dans lequel le moyen d'entrée reçoit un signal d'entrée de télévision en radiofréquence (RF).

7. Contrôleur selon la revendication 6, comprenant une entrée pour relier une antenne (14) afin de recevoir un signal de télévision diffusé, une sortie (32) et un amplificateur tampon (31) relié entre l'entrée et la sortie (32) pour sortir le signal sur l'entrée de l'antenne vers l'enregistreur vidéo, un syntonisateur (33) couplé avec l'entrée pour recevoir le signal de télévision diffusé, et un démodulateur (34) relié au syntonisateur et fournissant une sortie au moyen décodeur (36).

8. Récepteur de télévision comprenant un circuit électronique (11) et une unité de commande principale (12) pour celui-ci et une unité (16) recevant le signal de télécommande comprenant un capteur à infrarouge ou à ultrasons pour fournir des signaux de commande à l'unité de commande principale, le récepteur étant muni d'une unité portative (24) de télécommande ayant des éléments actionnables manuellement et l'unité de télécommande comprenant des moyens pour générer des signaux codés représentant les éléments mis en marche et un moyen comprenant un dispositif de transmission à infrarouge ou à ultrasons pour transmettre les signaux codés au capteur du récepteur, le récepteur étant de plus muni d'une seconde unité de commande (30), la seconde unité de commande comprenant un moyen (33,34) pour recevoir des signaux de commande du programme diffusé, un moyen (36) pour générer des signaux codés représentant les signaux de commande du programme reçu, lesquels signaux codés simulent les signaux codés générés dans l'unité de télécommande, et un moyen (38) comprenant un second dispositif de transmission infrarouge ou à ultrasons, respectivement, pour transmettre le signal codé au capteur du récepteur.

9. Enregistreur vidéo comprenant des composants électromécaniques (10), un circuit électronique (11), une unité de commande principale (12) pour celui-ci, et une unité (16) recevant le signal de télécommande pour fournir des signaux de commande à l'unité de commande principale représentant au moins des commandes de sélection de chaîne, d'enregistrement de lecture, l'enregistreur étant muni d'une unité portative (17) de télécommande ayant des éléments actionnables manuellement et l'unité de télécommande comprenant un moyen pour générer des signaux codés représentant les éléments mis en marche et transmettant les signaux codés à l'unité (16) recevant la télécommande de l'enregistreur vidéo, l'enregistreur vidéo étant de plus muni d'une seconde unité de commande de télécommande (18), la seconde unité de télécommande comprenant un moyen (36,38) réagissant aux signaux de commande du programme diffusé, pour générer des signaux codés représentant au moins des commandes de sélection de chaîne et d'enregistrement, lesquels signaux codés simulent la sortie de signaux codés par l'unité recevant le signal de télécommande, et la sortie de la seconde unité de télécommande est couplée à l'unité principale de commande pour commander celle-ci.

10. Récepteur de télévision comprenant un circuit électronique (11), une unité de commande principale (12) pour celui-ci, et une unité (16) recevant le signal de télécommande pour fournir des signaux de commande à l'unité de commande principale représentant au moins des commandes de sélection de chaîne, de marche/arrêt, le récepteur étant muni d'une unité portative (17) de télécommande ayant des éléments actionnables manuellement et l'unité de télécommande comprenant un moyen pour générer des signaux codés représentant les éléments mis en marche et transmettant les signaux codés à l'unité (16) recevant la télécommande du récepteur, le récepteur étant de plus muni d'une seconde unité de télécommande (18), la seconde unité de télécommande comprenant un moyen (36,38) réagissant aux signaux de commande du programme diffusé, pour générer des signaux codés représentant au moins des commandes de sélection de chaîne et d'enregistrement, lesquels signaux codés simulent la sortie de signaux codés par l'unité recevant le signal de télécommande, et la sortie de la seconde unité de télécommande est couplée à l'unité de commande principale pour commander celle-ci.
